# EUROPEAN PATENT APPLICATION

(11) **EP 4 831 553 A1**
(43) Date of publication of application: **28.10.2026**
(21) Application number: 26717196.5
(22) Date of filing: 09.01.2026
(51) Int. Cl.: F25B 1/00, F25B 13/00, F25B 49/02

(54) **REFRIGERATION CYCLE DEVICE, AND METHOD FOR CONTROLLING ELECTRIC EXPANSION VALVE OF REFRIGERATION CYCLE DEVICE**

(30) Priority: 25.02.2025 JP 2025028117
(71) Applicant: DAIKIN INDUSTRIES, LTD., Osaka-Shi, Osaka 530-0001 (JP)
(72) Inventor: NISHIGUCHI, Tomoya, Osaka-shi, Osaka 530-0001 (JP); INOUE, Akira, Osaka-shi, Osaka 530-0001 (JP)
(74) Representative: Hoffmann Eitle
(86) International application number: PCT/JP2026/000550
(87) International publication number: WO 2026/181525

(57) **Abstract**

To enhance reliability of control to close an electric expansion valve. A refrigeration cycle apparatus (100) includes a refrigerant circuit (90) that includes an indoor expansion valve (36a, 36b) and through which a refrigerant circulates, and a controller (70) that controls an opening degree of the indoor expansion valve (36a, 36b), wherein the controller (70) performs first control to increase a valve opening degree of the indoor expansion valve (36a, 36b) and then causes the indoor expansion valve (36a, 36b) to fully close when, for example, the refrigerant sensor (38a, 38b) detects refrigerant leakage, and a state of less than the predetermined minute opening degree continues for a predetermined period or longer.

## Description

### TECHNICAL FIELD

The present disclosure relates to a refrigeration cycle apparatus and a method for controlling an electric expansion valve of the refrigeration cycle apparatus.

### BACKGROUND ART

Conventionally, in a refrigeration cycle apparatus including a refrigerant circuit including an electric expansion valve, a passage state of a refrigerant in the electric expansion valve is adjusted by controlling a valve opening degree of the electric expansion valve.

For example, Patent Literature 1 (Japanese Unexamined Patent Publication No. 2016-035356 A) proposes performing an operation of causing an outdoor heat exchanger to recover a refrigerant in a refrigerant circuit by closing an expansion mechanism and operating a compressor.

### SUMMARY OF THE INVENTION

### <Technical Problem>

However, even if the control to close the electric expansion valve such as the expansion mechanism is started, for example, foreign matter such as debris present in the refrigerant circuit may enter between a valve seat and a valve body, and the electric expansion valve may remain in a state of not being completely closed.

Therefore, it is desirable to enhance reliability of control to close the electric expansion valve.

### <Solution to Problem>

According to a first aspect, a refrigeration cycle apparatus includes a refrigerant circuit and a control unit. The refrigerant circuit includes an electric expansion valve. The refrigerant circulates in the refrigerant circuit. The control unit controls an opening degree of the electric expansion valve. When a predetermined condition including a predetermined fully closed condition is satisfied, the control unit performs first control to increase a valve opening degree of the electric expansion valve and then performs second control to fully close the electric expansion valve.

Here, "to increase a valve opening degree of the electric expansion valve" means that the valve opening degree only needs to be larger than the valve opening degree of the electric expansion valve at the time of starting the first control.

With this refrigeration cycle apparatus, the first control to increase the valve opening degree of the electric expansion valve is performed before bringing the electric expansion valve into a fully closed state, so that even if foreign matter such as debris is present around the electric expansion valve, the foreign matter can be moved to a place away from the electric expansion valve. Thus, when the second control to fully close the electric expansion valve is performed, the electric expansion valve is likely to be in the fully closed state, so that the reliability of the control of the electric expansion valve is enhanced.

A refrigeration cycle apparatus according to a second aspect is the refrigeration cycle apparatus according to the first aspect, in which, in the first control, the control unit maintains a state in which the valve opening degree of the electric expansion valve is equal to or more than a first predetermined opening degree until a first predetermined period condition is satisfied. The second control is performed immediately after the first control is performed.

Here, the "first predetermined period condition" may be that a predetermined time such as 0.5 seconds to 1 second elapses, or that a time required until the valve opening degree of the electric expansion valve is set to a predetermined opening degree elapses.

With this refrigeration cycle apparatus, even if foreign matter such as debris is present around the electric expansion valve, the foreign matter is easily moved to a place away from the electric expansion valve before the second control is performed.

A refrigeration cycle apparatus according to a third aspect is the refrigeration cycle apparatus according to the first or second aspect, in which the predetermined condition includes a pre-state condition. The pre-state condition is that a state in which the valve opening degree of the electric expansion valve is less than a second predetermined opening degree continues for a period satisfying a second predetermined period condition or longer.

Here, the "state in which the opening degree is less than a second predetermined opening degree" may be, for example, a valve opening degree that is half or less, a valve opening degree that is 1/3 or less, or a valve opening degree that is 1/5 or less of a valve opening degree of a fully open state of the electric expansion valve.

The "second predetermined period condition" may be, for example, passage of a predetermined time or an integrated number of rotations of the compressor when the refrigerant circuit includes the compressor.

With this refrigeration cycle apparatus, when the state in which the valve opening degree of the electric expansion valve is less than the second predetermined opening degree continues for the period satisfying the second predetermined period condition or longer, foreign matter such as debris is likely to be present around the electric expansion valve, but even in such a state in which foreign matter such as debris is likely to be present around the electric expansion valve, the electric expansion valve can be more reliably brought into the fully closed state when the second control is performed.

A refrigeration cycle apparatus according to a fourth aspect is the refrigeration cycle apparatus according to the third aspect, in which the control unit performs control such that the valve opening degree of the electric expansion valve is less than the second predetermined opening degree when a thermal load to be processed is in a predetermined low load state.

With this refrigeration cycle apparatus, the valve opening degree of the electric expansion valve is controlled to be less than the second predetermined opening degree in the case of the predetermined low load state, so that the circulation amount of the refrigerant in the refrigerant circuit can be suppressed to an amount corresponding to the thermal load to be processed.

A refrigeration cycle apparatus according to a fifth aspect is the refrigeration cycle apparatus according to the third or fourth aspect, in which the refrigerant circuit includes a compressor, an outdoor heat exchanger, an indoor heat exchanger, a first flow path extending from the outdoor heat exchanger to the indoor heat exchanger and provided with the electric expansion valve, and a second flow path extending from the outdoor heat exchanger to the indoor heat exchanger and provided with a compressor. The refrigerant circuit is capable of performing a heating operation to cause the indoor heat exchanger to function as a radiator for the refrigerant. The control unit performs control such that the valve opening degree of the electric expansion valve is less than the second predetermined opening degree and is not in a fully closed state when a condition related to a set temperature corresponding to the indoor heat exchanger is satisfied.

With this refrigeration cycle apparatus, the liquid refrigerant is prevented from accumulating in the indoor heat exchanger when the condition related to the set temperature corresponding to the indoor heat exchanger is satisfied during the heating operation.

A refrigeration cycle apparatus according to a sixth aspect is the refrigeration cycle apparatus according to the third or fourth aspect, in which the refrigerant circuit includes a compressor, an outdoor heat exchanger, an indoor heat exchanger, a first flow path extending from the outdoor heat exchanger to the indoor heat exchanger and provided with the electric expansion valve, and a second flow path extending from the outdoor heat exchanger to the indoor heat exchanger and provided with a compressor. The refrigerant circuit is capable of performing a cooling operation to cause the indoor heat exchanger to function as an evaporator for the refrigerant. The control unit satisfies a predetermined fully closed condition when a condition related to a set temperature corresponding to the indoor heat exchanger is satisfied.

With this refrigeration cycle apparatus, the predetermined fully closed condition is satisfied when the condition regarding the set temperature corresponding to the indoor heat exchanger is satisfied during the cooling operation, so that a situation in which the indoor heat exchanger continues to absorb heat from the surroundings is suppressed.

A refrigeration cycle apparatus according to a seventh aspect is the refrigeration cycle apparatus according to the third or fourth aspect, in which the refrigerant circuit includes a compressor, an outdoor heat exchanger, a first indoor heat exchanger, a second indoor heat exchanger, a first electric expansion valve that is an electric expansion valve, a second electric expansion valve that is an electric expansion valve, a first main flow path extending from the outdoor heat exchanger to the first branch portion, a first branch flow path extending from the first branch portion to the first indoor heat exchanger and provided with the first electric expansion valve, a second branch flow path extending from the first branch portion to the second indoor heat exchanger and provided with the second electric expansion valve, a second main flow path extending from the outdoor heat exchanger to the second branch portion and provided with the compressor, a third branch flow path extending from the second branch portion to the first indoor heat exchanger, and a fourth branch flow path extending from the second branch portion to the second indoor heat exchanger.

With this refrigeration cycle apparatus, the refrigerant supply amount in the first indoor heat exchanger and the refrigerant supply amount in the second indoor heat exchanger can be individually controlled.

A refrigeration cycle apparatus according to an eighth aspect is the refrigeration cycle apparatus according to the seventh aspect, in which the refrigerant circuit is capable of performing a heating operation to cause the first indoor heat exchanger and the second indoor heat exchanger to function as radiators for the refrigerant. The control unit performs control such that the valve opening degree of the first electric expansion valve is less than the second predetermined opening degree and is not in a fully closed state when a condition related to a set temperature corresponding to the first indoor heat exchanger is satisfied. The control unit performs control such that the valve opening degree of the second electric expansion valve is less than the second predetermined opening degree and is not in the fully closed state when a condition related to a set temperature corresponding to the second indoor heat exchanger is satisfied.

With this refrigeration cycle apparatus, during the heating operation, accumulation of the liquid refrigerant in the first indoor heat exchanger is suppressed when the condition related to the set temperature corresponding to the first indoor heat exchanger is satisfied, and accumulation of the liquid refrigerant in the second indoor heat exchanger is suppressed when the condition related to the set temperature corresponding to the second indoor heat exchanger is satisfied.

A refrigeration cycle apparatus according to a ninth aspect is the refrigeration cycle apparatus according to the seventh or eighth aspect, in which the refrigerant circuit is capable of performing a cooling operation to cause the first indoor heat exchanger and the second indoor heat exchanger to function as evaporators for the refrigerant. The first electric expansion valve satisfies the predetermined fully closed condition when a condition related to a set temperature corresponding to the first indoor heat exchanger is satisfied. The second electric expansion valve satisfies the predetermined fully closed condition when a condition related to a set temperature corresponding to the second indoor heat exchanger is satisfied.

With this refrigeration cycle apparatus, during the cooling operation, the predetermined fully closed condition is satisfied when the condition related to the set temperature corresponding to the first indoor heat exchanger is satisfied, so that the situation in which the first indoor heat exchanger continues to absorb heat from the surroundings is suppressed, and the predetermined fully closed condition is satisfied when the condition related to the set temperature corresponding to the second indoor heat exchanger is satisfied, so that the situation in which the second indoor heat exchanger continues to absorb heat from the surroundings is suppressed.

A refrigeration cycle apparatus according to a tenth aspect is the refrigeration cycle apparatus according to any one of the first to ninth aspects, further including a leakage detection unit. The leakage detection unit detects a refrigerant leaked from the refrigerant circuit. The predetermined fully closed condition includes detection of refrigerant leakage by the leakage detection unit.

With this refrigeration cycle apparatus, it is possible to increase reliability of control to fully close the electric expansion valve when the refrigerant leaks from the refrigerant circuit.

A refrigeration cycle apparatus according to an eleventh aspect is the refrigeration cycle apparatus according to any one of the third to ninth aspects, in which the control unit performs the second control without performing the first control when the predetermined fully closed condition is satisfied without satisfying the pre-state condition.

With this refrigeration cycle apparatus, in a situation where there is a low possibility that foreign matter such as debris is present around the electric expansion valve not satisfying the pre-state condition, the first control to increase the valve opening degree of the electric expansion valve is omitted and the second control is started, so that the electric expansion valve can be quickly brought into the fully closed state.

A refrigeration cycle apparatus according to a twelfth aspect is the refrigeration cycle apparatus according to any one of the first to fourth aspects, in which the refrigerant circuit includes a compressor, an outdoor heat exchanger, an indoor heat exchanger, a first flow path extending from the outdoor heat exchanger to the indoor heat exchanger and provided with the electric expansion valve, and a second flow path extending from the outdoor heat exchanger to the indoor heat exchanger and provided with a compressor. The control unit is capable of performing pump-down operation control to cause the outdoor heat exchanger to function as a radiator for the refrigerant while causing the electric expansion valve to be in a fully closed state. The predetermined condition is satisfied when the pump-down operation control is started.

With this refrigeration cycle apparatus, the refrigerant is prevented from leaking and flowing in the electric expansion valve during the pump-down operation.

A refrigeration cycle apparatus according to a thirteenth aspect is the refrigeration cycle apparatus according to any one of the first to twelfth aspects, in which, in the first control, the control unit increases a valve opening degree of the electric expansion valve until the valve opening degree becomes a half opening degree or more.

With this refrigeration cycle apparatus, even if foreign matter such as debris is present around the electric expansion valve, the foreign matter can be more reliably moved to a position away from the electric expansion valve.

A refrigeration cycle apparatus according to a fourteenth aspect is the refrigeration cycle apparatus according to any one of the first to thirteenth aspects, in which the refrigerant is a refrigerant having at least one of predetermined toxicity and predetermined flammability.

Examples of the refrigerant include a carbon dioxide refrigerant, R32, and propane.

With this refrigeration cycle apparatus, reliability of control of the electric expansion valve can be enhanced when a refrigerant having predetermined toxicity or predetermined flammability is used.

A refrigeration cycle apparatus according to a fifteenth aspect is the refrigeration cycle apparatus according to any one of the first to fourteenth aspects, in which the refrigerant is a carbon dioxide refrigerant.

With this refrigeration cycle apparatus, reliability of control of the electric expansion valve can be enhanced when a toxic refrigerant is used.

A method for controlling an electric expansion valve of a refrigeration cycle apparatus according to a sixteenth aspect is a method for controlling an electric expansion valve of a refrigeration cycle apparatus, in which the refrigeration cycle apparatus includes a refrigerant circuit that includes the electric expansion valve and through which a refrigerant circulates, and a control unit that controls an opening degree of the electric expansion valve. When a predetermined condition including a predetermined fully closed condition is satisfied, the control unit performs first control to increase a valve opening degree of the electric expansion valve and then performs second control to fully close the electric expansion valve.

Here, "to increase a valve opening degree of the electric expansion valve" means that the valve opening degree only needs to be larger than the valve opening degree of the electric expansion valve at the time of starting the first control.

According to the method for controlling the electric expansion valve of the refrigeration cycle apparatus, the first control to increase the valve opening degree of the electric expansion valve is performed before bringing the electric expansion valve into a fully closed state, so that even if foreign matter such as debris is present around the electric expansion valve, the foreign matter can be moved to a place away from the electric expansion valve. Thus, when the second control to fully close the electric expansion valve is performed, the electric expansion valve is likely to be in the fully closed state, so that the reliability of the control of the electric expansion valve is enhanced.

### BRIEF DESCRIPTION OF THE DRAWINGS

FIG. 1 is a schematic configuration diagram of a refrigeration cycle apparatus according to an embodiment.
FIG. 2 is a control block diagram of the refrigeration cycle apparatus.
FIG. 3 is a schematic sectional configuration diagram of an indoor expansion valve.
FIG. 4 is a control flowchart of refrigerant leakage prevention processing.
FIG. 5 is a control flowchart related to cooling thermo-off in another embodiment A.

### DESCRIPTION OF EMBODIMENTS

Embodiments of a refrigeration cycle apparatus will be described with reference to the drawings.

### (1) Overall configuration

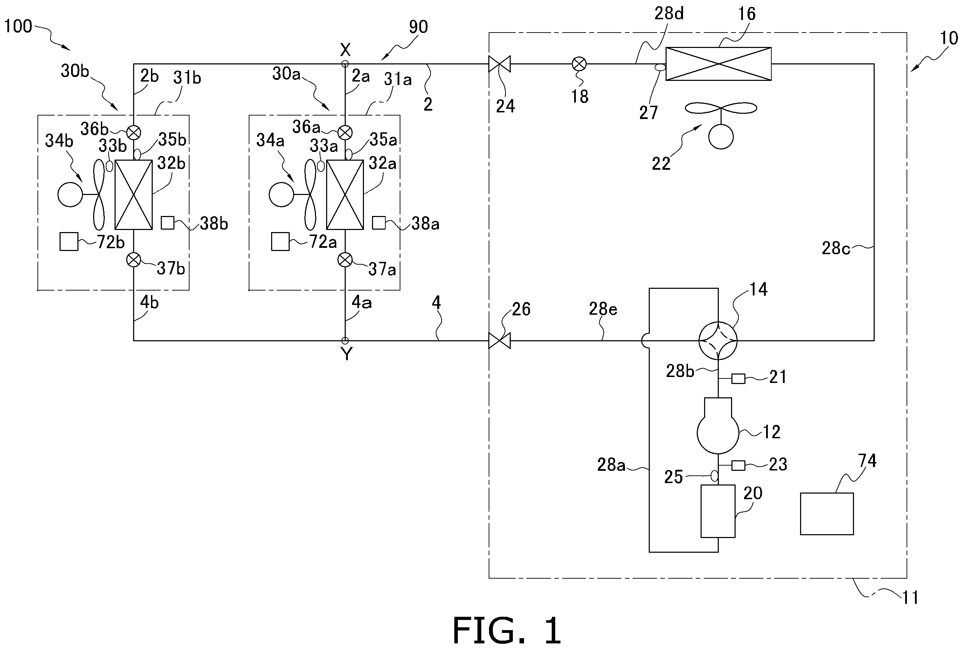

A refrigeration cycle apparatus 100 according to the present embodiment will be described with reference to a schematic configuration diagram of FIG. 1.

The refrigeration cycle apparatus 100 is an air conditioner that performs air conditioning of a plurality of air-conditioned spaces in a building. The refrigeration cycle apparatus 100 mainly includes an outdoor unit 10, a plurality of indoor units 30, and a controller 70 (see FIG. 1). Note that the number of the indoor units 30 illustrated in FIG. 1 does not limit the number of the indoor units 30 included in the refrigeration cycle apparatus 100. Unlike the present embodiment, the refrigeration cycle apparatus 100 may be, for example, an apparatus that includes only one indoor unit 30 and performs air conditioning in a single air conditioned space.

As illustrated in FIG. 1, the outdoor unit 10 and the indoor units 30 are connected by a liquid-side connection pipe 2, a first liquid-side branch pipe 2a and a second liquid-side branch pipe 2b that branch at a first branch point X that is an indoor unit side end of the liquid-side connection pipe 2, a gas-side connection pipe 4, and a first gas-side branch pipe 4a and a second gas-side branch pipe 4b that branch at a second branch point Y that is an indoor unit side end of the gas-side connection pipe 4. The outdoor unit 10 and the plurality of indoor units 30 are connected by these pipes to form a refrigerant circuit 90 including a compressor 12, an outdoor heat exchanger 16, an outdoor expansion valve 18, an indoor expansion valve 36, an indoor heat exchanger 32, and the like, which will be described later. The liquid-side connection pipe 2 is a liquid connection pipe through which the refrigerant flows from the outdoor unit 10 to the indoor unit 30 during a cooling operation, and through which the refrigerant flows from the indoor unit 30 to the outdoor unit 10 during a heating operation. The gas-side connection pipe 4 is a gas connection pipe through which the refrigerant flows from the indoor units 30 to the outdoor unit 10 during the cooling operation, and through which the refrigerant flows from the outdoor unit 10 to the indoor units 30 during the heating operation. The controller 70 controls operation of each unit of the refrigeration cycle apparatus 100.

Note that the refrigerant used in the refrigerant circuit 90 is not limited, but for example, in the present embodiment, a case where a carbon dioxide refrigerant is used will be described as an example.

### (2) Detailed configuration

### (2-1) Indoor unit

The indoor unit 30 is installed in an air conditioned space to be air-conditioned. The indoor unit 30 is, for example, a ceiling-embedded unit, a ceiling pendant unit, a wall-hung unit, a floor-standing unit, or the like. In the present embodiment, a case where a first indoor unit 30a and a second indoor unit 30b having similar configurations are provided as the indoor unit 30 will be described as an example. The first indoor unit 30a and the second indoor unit 30b are connected in parallel to each other in the refrigerant circuit 90. Components included in the first indoor unit 30a will be described with a suffix "a", and components included in the second indoor unit 30b will be described with a suffix "b". Note that, hereinafter, any one or both of the first indoor unit 30a, the second indoor unit 30b, or components thereof may be referred to without adding any of the suffixes "a" and "b".

The first indoor unit 30a mainly includes a first indoor heat exchanger 32a, a first indoor fan 34a, a first indoor expansion valve 36a, a first indoor control unit 72a, a first gas-side valve 37a, a first indoor heat-exchange temperature sensor 35a, a first indoor temperature sensor 33a, a first refrigerant sensor 38a, and a first casing 31a that accommodates these components.

The first indoor heat exchanger 32a causes heat exchange between the refrigerant flowing inside the first indoor heat exchanger 32a and air in the air conditioned space. The first indoor heat exchanger 32a is, for example, a fin-and-tube heat exchanger including a plurality of heat transfer fins and a plurality of heat transfer tubes.

The first indoor fan 34a supplies the air taken in from the air conditioned space to the first indoor heat exchanger 32a. The first indoor fan 34a is, for example, a centrifugal fan such as a turbo fan or a sirocco fan. The first indoor fan 34a is driven by a motor (not illustrated).

The first indoor expansion valve 36a is provided on the first liquid-side branch pipe 2a connecting the liquid-side connection pipe 2 and a liquid-side end of the first indoor heat exchanger 32a, and is a mechanism for adjusting the pressure and the flow rate of the refrigerant. The first indoor expansion valve 36a is an electric expansion valve such as an electronic expansion valve whose opening degree can be adjusted. The first indoor expansion valve 36a includes a valve seat, a valve body, and a stepping motor that drives the valve body, and the minimum flow path area between the valve body and the valve seat is variable as the valve body moves with respect to the valve seat by driving the stepping motor. Note that the first indoor expansion valve 36a is a valve that is also used as a blocking valve for blocking the flow path and has a small leakage amount when the valve is closed. For example, the first indoor expansion valves 36a are valves having a leakage amount of 300 cm³/min (air, ΔP = 1.0 MPa) or less while the valves are closed. The materials of the valve seat and the valve body of the first indoor expansion valve 36a are not limited, but may be selected from SUS, brass, and the like, and from the viewpoint that SUS has strength to easily crush the foreign matter even if foreign matter is caught between the valve seat and the valve body, the valve seat and the valve body are preferably made of SUS.

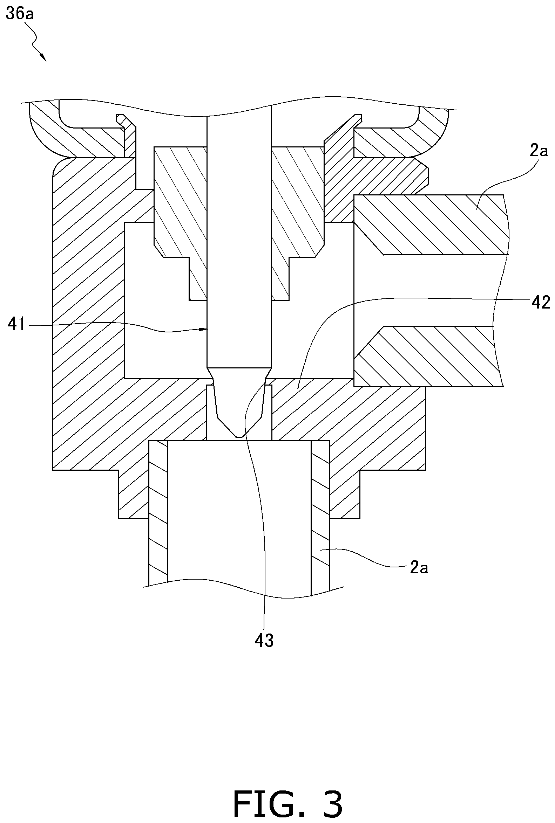

Note that the first indoor expansion valve 36a in the present embodiment may be, more specifically, for example, a motor-driven expansion valve as illustrated in FIG. 3, and may include a valve body 41, a valve seat 42, and a drive mechanism (not illustrated). The valve body 41 has a needle shape with a tapered tip, and its position is controlled by a drive mechanism so as to move in the axial direction. The valve seat 42 includes an orifice hole 43 into which the tip of the valve body 41 is inserted. By controlling the position of the valve body 41 with respect to the valve seat 42 in this manner, the size of the flow path area in the first indoor expansion valve 36a is controlled.

The first gas-side valve 37a is provided on the first gas-side branch pipe 4a connecting the gas-side connection pipe 4 and a gas-side end of the first indoor heat exchanger 32a, and is a mechanism in which the valve opening degree is variable. The first gas-side valve 37a of the present embodiment is an electric expansion valve such as an electronic expansion valve whose opening degree can be adjusted. The first gas-side valve 37a includes a valve seat, a valve body, and a stepping motor that drives the valve body, and the minimum flow path area between the valve body and the valve seat is variable as the valve body moves with respect to the valve seat by driving the stepping motor. Note that the first gas-side valve 37a is a valve that is also used as a blocking valve for blocking the flow path and has a small leakage amount when the valve is closed. For example, the first gas-side valve 37a is a valve having a leakage amount of 300 cm³/min (air, ΔP = 1.0 MPa) or less while the valve is closed.

The first indoor heat-exchange temperature sensor 35a detects the temperature of the refrigerant flowing through the liquid-side outlet of the first indoor heat exchanger 32a.

The first indoor temperature sensor 33a detects an indoor air temperature sucked from the room before heat exchange by the first indoor heat exchanger 32a.

The first refrigerant sensor 38a is a sensor that detects refrigerant leakage. The first refrigerant sensor 38a is provided, for example, near the first indoor heat exchanger 32a.

The first indoor control unit 72a includes a control calculation device and a storage device. The control calculation device is a processor such as a CPU and a GPU. The storage device is a storage medium such as a RAM, a ROM, or a flash memory. The control calculation device reads a program stored in the storage device, performs predetermined calculation processing according to the program, and controls operations of various devices of the refrigeration cycle apparatus 100 as the controller 70 in cooperation with an outdoor control unit 74 of the outdoor unit 10. The function of the controller 70 will be described later.

The second indoor unit 30b mainly includes a second indoor heat exchanger 32b, a second indoor fan 34b, a second indoor expansion valve 36b, a second indoor control unit 72b, a second gas-side valve 37b, a second indoor heat-exchange temperature sensor 35b, a second indoor temperature sensor 33b, a second refrigerant sensor 38b, and a second casing 31b that accommodates these components. The configuration of the second indoor unit 30b is similar to that of the first indoor unit 30a, and thus the description thereof is omitted.

### (2-2) Outdoor unit

The outdoor unit 10 is installed on a rooftop, a machine room, or the like of a building where the refrigeration cycle apparatus 100 is installed. As illustrated in FIG. 1, the outdoor unit 10 mainly includes a compressor 12, a flow path switching valve 14, an outdoor heat exchanger 16, an outdoor expansion valve 18, an accumulator 20, an outdoor fan 22, a liquid shutoff valve 24, a gas shutoff valve 26, a discharge pressure sensor 21, a suction pressure sensor 23, a suction temperature sensor 25, an outdoor heat-exchange temperature sensor 27, and an outdoor control unit 74. The outdoor unit 10 also includes a suction pipe 28a, a discharge pipe 28b, a first gas refrigerant pipe 28c, a second gas refrigerant pipe 28e, a liquid refrigerant pipe 28d, and a casing 11 that accommodates these components.

The suction pipe 28a connects the flow path switching valve 14 and a suction side of the compressor 12. The suction pipe 28a is provided with the accumulator 20. The discharge pipe 28b connects a discharge side of the compressor 12 and the flow path switching valve 14. The first gas refrigerant pipe 28c connects the flow path switching valve 14 and a gas-side end of the outdoor heat exchanger 16. The liquid refrigerant pipe 28d connects the liquid-side end of the outdoor heat exchanger 16 and the liquid-side connection pipe 2. The liquid refrigerant pipe 28d is provided with the outdoor expansion valve 18. The liquid shutoff valve 24 is provided at a connection portion between the liquid refrigerant pipe 28d and the liquid-side connection pipe 2. The second gas refrigerant pipe 28e connects the flow path switching valve 14 and the gas-side connection pipe 4. A gas shutoff valve 26 is provided at a connection portion between the second gas refrigerant pipe 28e and the gas-side connection pipe 4. The liquid shutoff valve 24 and the gas shutoff valve 26 are openable and closable manually.

The compressor 12 sucks a low-pressure refrigerant in a refrigeration cycle from the suction pipe 28a, compresses the refrigerant by a compression mechanism (not illustrated), and discharges the compressed high-pressure refrigerant in the refrigeration cycle to the discharge pipe 28b. The compressor 12 is, for example, a displacement compressor of a rotary type or a scroll type. The compression mechanism of the compressor 12 is driven by a motor (not illustrated). The number of rotations of the motor of the compressor 12 is controllable by an inverter.

The flow path switching valve 14 is a mechanism that switches a refrigerant flow path between a first state and a second state. In the first state, the flow path switching valve 14 causes the suction pipe 28a to communicate with the second gas refrigerant pipe 28e and causes the discharge pipe 28b to communicate with the first gas refrigerant pipe 28c as indicated by a solid line in the flow path switching valve 14 in FIG. 1. In the second state, the flow path switching valve 14 causes the suction pipe 28a to communicate with the first gas refrigerant pipe 28c and causes the discharge pipe 28b to communicate with the second gas refrigerant pipe 28e as indicated by a broken line in the flow path switching valve 14 in FIG. 1. The flow path switching valve 14 is, for example, a four-way switching valve or a combination of a plurality of three-way valves.

During the cooling operation, the flow path switching valve 14 brings the refrigerant flow path into the first state. At this time, the refrigerant discharged from the compressor 12 flows through the refrigerant circuit 90 in the order of the outdoor heat exchanger 16, the outdoor expansion valve 18, the first indoor expansion valve 36a, and the first indoor heat exchanger 32a, and further in the order of the second indoor expansion valve 36b and the second indoor heat exchanger 32b, and returns to the compressor 12. In the first state, the outdoor heat exchanger 16 functions as a radiator or a condenser, and the first indoor heat exchanger 32a and the second indoor heat exchanger 32b function as evaporators.

During the heating operation, the flow path switching valve 14 brings the refrigerant flow path into the second state. At this time, the refrigerant discharged from the compressor 12 flows through the refrigerant circuit 90 in the order of the first indoor heat exchanger 32a, the first indoor expansion valve 36a, the second indoor heat exchanger 32b, the second indoor expansion valve 36b, the outdoor expansion valve 18, and the outdoor heat exchanger 16, and returns to the compressor 12. In the second state, the outdoor heat exchanger 16 functions as an evaporator, and the first indoor heat exchanger 32a and the second indoor heat exchanger 32b function as a radiator or a condenser.

The outdoor heat exchanger 16 causes heat exchange between the refrigerant flowing inside the outdoor heat exchanger 16 and the air around the outdoor unit 10. The outdoor heat exchanger 16 is, for example, a fin-and-tube heat exchanger including a plurality of heat transfer fins and a plurality of heat transfer tubes.

The outdoor expansion valve 18 is a mechanism configured to control pressure and a flow rate of the refrigerant flowing in the liquid refrigerant pipe 28d. As illustrated in FIG. 1, the outdoor expansion valve 18 is provided in the liquid refrigerant pipe 28d. The outdoor expansion valve 18 is an electric expansion valve such as an electronic expansion valve whose opening degree can be adjusted.

The accumulator 20 is a container provided in the suction pipe 28a and having a gas-liquid separation function of separating an inflowing refrigerant into a gas refrigerant and a liquid refrigerant. A refrigerant flowing into the accumulator 20 is separated into a gas refrigerant and a liquid refrigerant, and the gas refrigerant collecting in an upper space flows into the compressor 12.

The outdoor fan 22 supplies air around the outdoor unit 10 to the outdoor heat exchanger 16. The outdoor fan 22 is, for example, an axial fan such as a propeller fan. The outdoor fan 22 is driven by a motor (not illustrated).

The discharge pressure sensor 21 is provided between the compressor 12 and the flow path switching valve 14, and detects the pressure of the refrigerant discharged from the compressor 12.

The suction pressure sensor 23 is provided between the accumulator 20 and the compressor 12, and detects the pressure of the refrigerant sucked into the compressor 12.

The suction temperature sensor 25 is provided between the accumulator 20 and the compressor 12, and detects the temperature of the refrigerant sucked into the compressor 12.

The outdoor heat-exchange temperature sensor 27 detects the temperature of the refrigerant flowing through the liquid-side outlet of the outdoor heat exchanger 16.

The outdoor control unit 74 includes a control calculation device and a storage device. The control calculation device is a processor such as a CPU and a GPU. The storage device is a storage medium such as a RAM, a ROM, or a flash memory. The control calculation device reads a program stored in the storage device, performs predetermined calculation processing according to the program, and controls operations of various devices of the refrigeration cycle apparatus 100 as the controller 70 in cooperation with the indoor control unit 72 of the indoor unit 30. The function of the controller 70 will be described later.

### (2-3) Controller

The controller 70 includes a first indoor control unit 72a, a second indoor control unit 72b, and an outdoor control unit 74. The controller 70 controls the entire operation of the refrigeration cycle apparatus 100 by causing each control calculation device of the first indoor control unit 72a, the second indoor control unit 72b, and the outdoor control unit 74 to execute a program stored in each storage device.

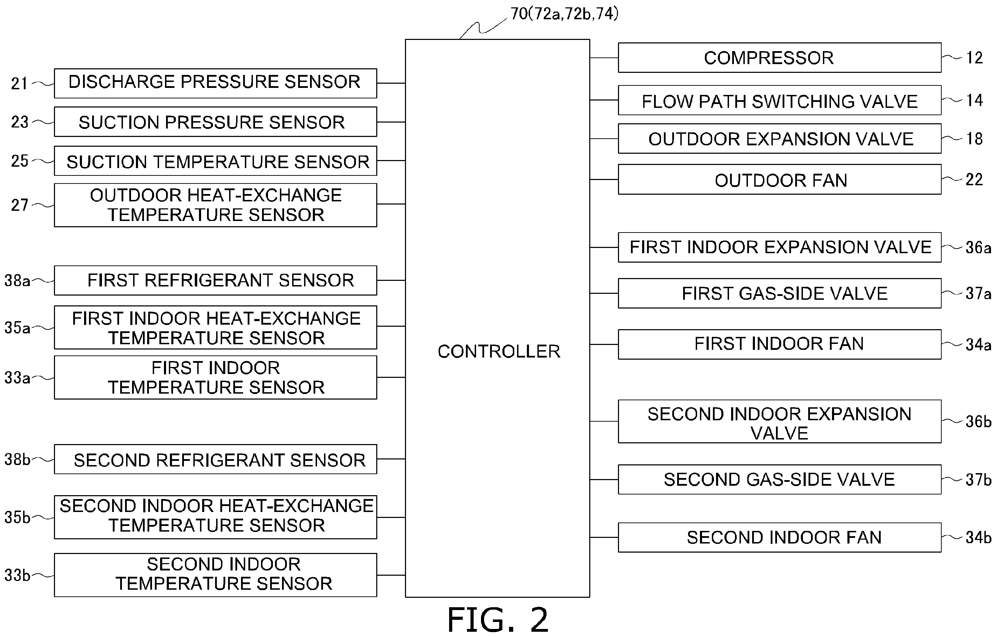

FIG. 2 is a control block diagram of the refrigeration cycle apparatus 100 according to the present embodiment.

As illustrated in FIG. 2, the controller 70 is electrically connected to the first gas-side valve 37a, the first indoor expansion valve 36a, the first indoor fan 34a, the first indoor heat-exchange temperature sensor 35a, the first indoor temperature sensor 33a, and the first refrigerant sensor 38a of the first indoor unit 30a, the second gas-side valve 37b, the second indoor expansion valve 36b, the second indoor fan 34b, the second indoor heat-exchange temperature sensor 35b, the second indoor temperature sensor 33b, and the second refrigerant sensor 38b of the second indoor unit 30b, and the compressor 12, the flow path switching valve 14, the outdoor expansion valve 18, the discharge pressure sensor 21, the suction pressure sensor 23, the suction temperature sensor 25, the outdoor heat-exchange temperature sensor 27, and the outdoor fan 22 of the outdoor unit 10. The controller 70 is also electrically connected to various sensors that measure a temperature and pressure of the refrigerant, a temperature of air in the air conditioned space, an outside air temperature, and the like. The controller 70 controls operations of various devices included in the refrigeration cycle apparatus 100 on the basis of control signals received by the first indoor unit 30a and the second indoor unit 30b from an operation remote controller (not illustrated), measurement signals of various sensors, and the like.

The controller 70 mainly performs the cooling operation and the heating operation. The controller 70 can also execute refrigerant leakage prevention processing described later.

### (2-3-1) Cooling operation

Upon receiving an instruction to perform the cooling operation from the operation remote controller via the indoor unit 30, for example, the controller 70 brings the flow path switching valve 14 into the first state and starts the operation of the compressor 12. In addition, the number of rotations of the motor of the compressor 12 and the opening degrees of the outdoor expansion valve 18, the first indoor expansion valve 36a, and the second indoor expansion valve 36b are appropriately controlled on the basis of a measurement result, a set temperature, and the like of a sensor that is provided in the refrigerant circuit 90 and measures the temperature and pressure of the refrigerant. Note that, during the cooling operation, the first gas-side valve 37a and the second gas-side valve 37b are controlled to be fully opened.

The flow of the refrigerant in the refrigerant circuit 90 will be described.

When the operation of the compressor 12 is started, a gas refrigerant having a low pressure in the refrigeration cycle (hereinafter simply referred to as low pressure) is sucked into the compressor 12 and compressed by the compression mechanism of the compressor 12 to become a refrigerant having a high pressure in the refrigeration cycle (hereinafter simply referred to as high pressure). The high-pressure refrigerant is sent to the outdoor heat exchanger 16 via the flow path switching valve 14, and exchanges heat with air around the outdoor unit 10 supplied by the outdoor fan 22 to dissipate heat. The refrigerant having dissipated heat in the outdoor heat exchanger 16 flows through the liquid refrigerant pipe 28d and passes through the outdoor expansion valve 18. Note that in the present embodiment, for example, in the cooling operation, the valve opening degree of the outdoor expansion valve 18 is controlled such that the degree of subcooling of the refrigerant flowing through the outlet of the outdoor heat exchanger 16 satisfies a predetermined condition. Specifically, the degree of subcooling grasped from a pressure-equivalent saturation temperature grasped from the discharge pressure sensor 21 and the refrigerant temperature detected by the outdoor heat-exchange temperature sensor 27 is controlled to satisfy a predetermined condition. The refrigerant that has passed through the outdoor expansion valve 18 and has flowed through the liquid-side connection pipe 2 branches into the first liquid-side branch pipe 2a and the second liquid-side branch pipe 2b at the first branch point X to be sent separately to the first indoor unit 30a and the second indoor unit 30b.

The refrigerant sent to the first indoor unit 30a is decompressed to a pressure closer to the suction pressure of the compressor 12 in the first indoor expansion valve 36a, becomes the refrigerant in a gas-liquid two-phase state, and is sent to the first indoor heat exchanger 32a. Note that, in the present embodiment, for example, in the cooling operation, the valve opening degree of the first indoor expansion valve 36a is controlled such that the degree of superheating of the refrigerant sucked by the compressor 12 satisfies a predetermined condition. Specifically, the degree of superheating grasped from the pressure-equivalent saturation temperature grasped from the suction pressure sensor 23 and the refrigerant temperature detected by the suction temperature sensor 25 is controlled to satisfy a predetermined condition. The refrigerant in the gas-liquid two-phase state exchanges heat with the air in the air conditioned space supplied to the first indoor heat exchanger 32a by the first indoor fan 34a in the first indoor heat exchanger 32a and evaporates to become a low-pressure gas refrigerant. The low-pressure gas refrigerant is sent from the first indoor unit 30a to the gas-side connection pipe 4 via the first gas-side branch pipe 4a.

Note that the first indoor unit 30a is controlled to be in a thermo-off state during cooling in a state in which the temperature detected by the first indoor temperature sensor 33a satisfies the condition related to the set temperature of the first indoor unit 30a during cooling received by the operation remote controller or the like. Specifically, control for bringing the valve opening degree of the first indoor expansion valve 36a of the first indoor unit 30a into a fully closed state is performed. Thus, even in the thermo-off state during the cooling operation, the refrigerant is prevented from evaporating in the first indoor heat exchanger 32a, and cool air is prevented from flowing from the first indoor heat exchanger 32a toward the inside of the room. Note that the condition related to the set temperature is not limited, and may be, for example, any of a case where the temperature detected by the first indoor temperature sensor 33a has reached the set temperature, a case where the temperature has reached a predetermined temperature exceeding the set temperature, a case where a predetermined time has elapsed in a state where the temperature has reached the set temperature, and the like (the same applies hereinafter).

The liquid refrigerant sent to the second indoor unit 30b is decompressed to a pressure close to the suction pressure of the compressor 12 in the second indoor expansion valve 36b similarly to the first indoor unit 30a, becomes a refrigerant in a gas-liquid two-phase state, and is sent to the second indoor heat exchanger 32b. Note that, in the present embodiment, in the cooling operation, the valve opening degree of the second indoor expansion valve 36b is controlled such that the degree of superheating of the refrigerant sucked by the compressor 12 satisfies a predetermined condition. Specifically, the degree of superheating grasped from the pressure-equivalent saturation temperature grasped from the suction pressure sensor 23 and the refrigerant temperature detected by the suction temperature sensor 25 is controlled to satisfy a predetermined condition. The refrigerant in the gas-liquid two-phase state exchanges heat, in the second indoor heat exchanger 32b, with the air in the air conditioned space supplied to the second indoor heat exchanger 32b by the second indoor fan 34b and evaporates to become a low-pressure gas refrigerant. The low-pressure gas refrigerant is sent from the second indoor unit 30b to the gas-side connection pipe 4 via the second gas-side branch pipe 4b.

Note that the second indoor unit 30b is controlled to be in the thermo-off state during cooling in a state in which the temperature detected by the second indoor temperature sensor 33b satisfies the condition related to the set temperature of the second indoor unit 30b during cooling received by the operation remote controller or the like. Specifically, control for bringing the valve opening degree of the second indoor expansion valve 36b of the second indoor unit 30b into the fully closed state is performed. Thus, even in the thermo-off state during the cooling operation, the refrigerant is prevented from evaporating in the second indoor heat exchanger 32b, and cool air is prevented from flowing from the second indoor heat exchanger 32b toward the inside of the room.

The refrigerant flowing through the gas-side connection pipe 4 is sent to the outdoor unit 10, and flows into the accumulator 20 via the flow path switching valve 14. The low-pressure gas refrigerant having flowed into the accumulator 20 is sucked into the compressor 12 again.

### (2-3-2) Heating operation

Upon receiving an instruction to perform the heating operation from the operation remote controller via the indoor unit 30, for example, the controller 70 brings the flow path switching valve 14 into the second state and starts the operation of the compressor 12. In addition, the number of rotations of the motor of the compressor 12 and the opening degrees of the outdoor expansion valve 18, the first indoor expansion valve 36a, and the second indoor expansion valve 36b are appropriately controlled on the basis of a measurement result, a set temperature, and the like of a sensor that is provided in the refrigerant circuit 90 and measures the temperature and pressure of the refrigerant. Note that, during the heating operation, the first gas-side valve 37a and the second gas-side valve 37b are controlled to be fully opened.

The flow of the refrigerant in the refrigerant circuit 90 will be described.

When the compressor 12 is activated, a low-pressure gas refrigerant is sucked into the compressor 12 and is compressed by the compressor 12 into a high-pressure gas refrigerant. The high-pressure gas refrigerant flows through the gas-side connection pipe 4 via the flow path switching valve 14 and branches into the first gas-side branch pipe 4a and the second gas-side branch pipe 4b at the second branch point Y, thereby being sent separately to the first indoor unit 30a and the second indoor unit 30b.

The gas refrigerant sent to the first indoor unit 30a passes through the first gas-side valve 37a controlled to the fully open state, and is sent to the first indoor heat exchanger 32a. The refrigerant sent to the first indoor heat exchanger 32a exchanges heat with air in the air-conditioned space supplied to the first indoor heat exchanger 32a by the first indoor fan 34a to dissipate heat. The temperature of the air supplied to the first indoor heat exchanger 32a is increased by heat exchange with the refrigerant flowing through the first indoor heat exchanger 32a, and the heated air is blown out into the air-conditioned space. The refrigerant having dissipated heat in the first indoor heat exchanger 32a is decompressed in the first indoor expansion valve 36a. Note that, in the present embodiment, for example, in the heating operation, the valve opening degree of the first indoor expansion valve 36a is controlled such that the degree of subcooling of the refrigerant flowing through the outlet of the first indoor heat exchanger 32a satisfies a predetermined condition. Specifically, the degree of subcooling grasped from the pressure-equivalent saturation temperature grasped from the discharge pressure sensor 21 and the refrigerant temperature detected by the first indoor heat-exchange temperature sensor 35a is controlled to satisfy a predetermined condition. The refrigerant decompressed by the first indoor expansion valve 36a is sent to the liquid-side connection pipe 2 via the first liquid-side branch pipe 2a.

Note that the first indoor unit 30a is controlled to be in the thermo-off state during heating in a state in which the temperature detected by the first indoor temperature sensor 33a satisfies the condition related to the set temperature of the first indoor unit 30a during heating received by the operation remote controller or the like. Specifically, the valve opening degree of the first indoor expansion valve 36a of the first indoor unit 30a is controlled to be in a predetermined slightly open state that is not the fully closed state but is an opening degree less than a predetermined minute opening degree. The predetermined minute opening degree is not limited, and may be, for example, a valve opening degree having a flow path area that is 1/2 or less, 1/3 or less, or 1/5 or less of the flow path area of the valve opening degree of the first indoor expansion valve 36a in the fully open state. Thus, even in the thermo-off state during the heating operation, the state in which the flow of the refrigerant is generated in the first indoor heat exchanger 32a is kept, so that a large amount of liquid refrigerant is prevented from accumulating in the first indoor heat exchanger 32a.

The gas refrigerant sent to the second indoor unit 30b is similar to the refrigerant sent to the first indoor unit 30a, passes through the second gas-side valve 37b controlled to the fully open state, and is sent to the second indoor heat exchanger 32b. The refrigerant sent to the second indoor heat exchanger 32b exchanges heat with air in the air-conditioned space supplied to the second indoor heat exchanger 32b by the second indoor fan 34b to dissipate heat. The temperature of the air supplied to the second indoor heat exchanger 32b is increased by heat exchange with the refrigerant flowing through the second indoor heat exchanger 32b, and the heated air is blown out into the air-conditioned space. The refrigerant having dissipated heat in the second indoor heat exchanger 32b is decompressed in the second indoor expansion valve 36b. Note that, in the present embodiment, for example, in the heating operation, the valve opening degree of the second indoor expansion valve 36b is controlled such that the degree of subcooling of the refrigerant flowing through the outlet of the second indoor heat exchanger 32b satisfies a predetermined condition. Specifically, the degree of subcooling grasped from the pressure-equivalent saturation temperature grasped from the discharge pressure sensor 21 and the refrigerant temperature detected by the second indoor heat-exchange temperature sensor 35b is controlled to satisfy a predetermined condition. The refrigerant decompressed by the second indoor expansion valve 36b is sent to the liquid-side connection pipe 2 via the second liquid-side branch pipe 2b.

Note that the second indoor unit 30b is controlled to be in the thermo-off state during heating in a state in which the temperature detected by the second indoor temperature sensor 33b satisfies the condition related to the set temperature of the second indoor unit 30b during heating received by the operation remote controller or the like. Specifically, the valve opening degree of the second indoor expansion valve 36b of the second indoor unit 30b is controlled so as to be in the predetermined slightly open state that is not the fully closed state but is an opening degree less than the predetermined minute opening degree. The predetermined minute opening degree is not limited, and may be, for example, a valve opening degree having a flow path area that is 1/2 or less, 1/3 or less, or 1/5 or less of the flow path area of the valve opening degree of the second indoor expansion valve 36b in the fully open state. Thus, even in the thermo-off state during the heating operation, the state in which the flow of the refrigerant is generated in the second indoor heat exchanger 32b is kept, so that a large amount of liquid refrigerant is prevented from accumulating in the second indoor heat exchanger 32b.

The refrigerant flowing through the liquid-side connection pipe 2 is sent to the outdoor unit 10. The refrigerant flowing through the liquid refrigerant pipe 28d in the outdoor unit 10 is decompressed to near the suction pressure of the compressor 12 in the outdoor expansion valve 18, becomes the refrigerant in the gas-liquid two-phase state, and flows into the outdoor heat exchanger 16. Note that, in the present embodiment, for example, in the heating operation, the valve opening degree of the outdoor expansion valve 18 is controlled such that the degree of superheating of the refrigerant sucked by the compressor 12 satisfies a predetermined condition. Specifically, the degree of superheating grasped from the pressure-equivalent saturation temperature grasped from the suction pressure sensor 23 and the refrigerant temperature detected by the suction temperature sensor 25 is controlled to satisfy a predetermined condition. The low-pressure refrigerant in the gas-liquid two-phase state that has flowed into the outdoor heat exchanger 16 exchanges heat with the air around the outdoor unit 10 supplied by the outdoor fan 22 and evaporates to become a low-pressure gas refrigerant. The low-pressure gas refrigerant flows into the accumulator 20 via the flow path switching valve 14. The low-pressure gas refrigerant having flowed into the accumulator 20 is sucked into the compressor 12 again.

### (2-3-3) Outline of refrigerant leakage prevention processing

When any one of the first refrigerant sensor 38a of the first indoor unit 30a that is the indoor unit 30 and the second refrigerant sensor 38b of the second indoor unit 30b that is the indoor unit 30 detects refrigerant leakage (an example of a predetermined fully closed condition), the controller 70 performs control (an example of second control) to set the fully closed state as a target state for the indoor expansion valve 36 of the indoor unit 30 in which refrigerant leakage is detected and the gas-side valve 37 of the indoor unit 30 in which refrigerant leakage is detected, thereby performing refrigerant leakage prevention processing of blocking the refrigerant from flowing into the indoor heat exchanger 32 through the liquid-side connection pipe 2 and the gas-side connection pipe 4, and of blocking the refrigerant to the indoor unit 30. Here, in the indoor expansion valve 36 of the indoor unit 30 in which refrigerant leakage has been detected, in order to reduce the possibility that foreign matter such as debris is caught between the valve seat and the valve body and cannot be brought into the fully closed state, in a case where a state in which the opening degree of the indoor expansion valve 36 is less than a predetermined minute opening degree (an example of the second predetermined opening degree) has continued for a predetermined period (an example of the second predetermined period condition) or longer (an example of the pre-state condition) (an example of the predetermined condition), control (an example of the first control) is performed to raise the valve opening degree from the current state at a stage before the control to the fully closed state is performed, thereby ensuring a state where no foreign matter is present in the surroundings.

Note that when refrigerant leakage is detected in any of the indoor units 30, the controller 70 does not stop the operation of the compressor 12 but continues the cooling operation or the heating operation in the indoor unit 30 other than the indoor unit 30 in which the refrigerant leakage is detected. Furthermore, when refrigerant leakage is detected in any of the indoor units 30, the controller 70 may stop the operation of the compressor 12 and/or may also stop the cooling operation or the heating operation in the unit other than the indoor unit 30 in which the refrigerant leakage is detected.

Note that when the refrigerant sensor 38 of any of the indoor units 30 detects refrigerant leakage, the controller 70 notifies, for example, the operation remote controller of the indoor unit 30 from which the refrigerant leakage is detected.

### (3) Control flow of refrigerant leakage prevention processing

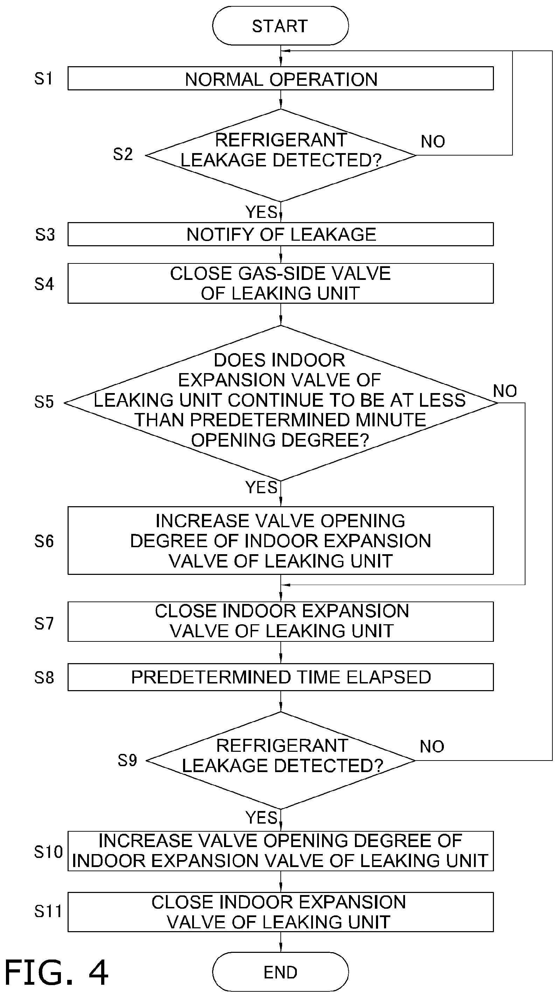

FIG. 4 is a control flowchart of the refrigerant leakage prevention processing.

In step S1, the controller 70 performs normal operation. Specifically, the controller 70 performs a cooling operation or a heating operation on the refrigeration cycle apparatus 100 such that a condition related to a predetermined set temperature is satisfied. Here, the controller 70 stores history information of control states of the valve opening degrees of the first indoor expansion valve 36a and the second indoor expansion valve 36b in the memory while executing normal control.

In step S2, the controller 70 determines whether or not refrigerant leakage is detected in any of the indoor units 30. Specifically, the controller 70 determines whether or not the first refrigerant sensor 38a or the second refrigerant sensor 38b detects refrigerant leakage. Here, when refrigerant leakage has been detected, the processing in and after step S3 is performed while recognizing the indoor unit 30 including the refrigerant sensor 38 that has detected the leakage as a leaking unit. If no refrigerant leakage is detected, the processing returns to step S1 to continue the normal operation.

In step S3, the controller 70 identifies the indoor unit 30 in which refrigerant leakage is detected, and notifies the remote controller or the controller 70 of the fact of the refrigerant leakage.

In step S4, the controller 70 recognizes the indoor unit 30 in which the refrigerant leakage has been detected as a leaking unit, and performs control to close the gas-side valve 37 of the leaking unit. Specifically, when the first refrigerant sensor 38a detects refrigerant leakage, the controller 70 performs control to close the first gas-side valve 37a of the first indoor unit 30a while recognizing the first indoor unit 30a as a leaking unit. When the second refrigerant sensor 38b detects refrigerant leakage, the controller 70 performs control to close the second gas-side valve 37b of the second indoor unit 30b while recognizing the second indoor unit 30b as a leaking unit. Note that the first gas-side valve 37a and the second gas-side valve 37b are controlled to the fully open state during both the cooling operation and the heating operation, and the valve opening degree is not narrowed, so that a state in which the possibility that foreign matter such as debris is present in the surroundings is low is kept. Therefore, even if the control to close the first gas-side valve 37a or the second gas-side valve 37b is performed, a state in which foreign matter such as debris is caught between the valve seat and the valve body in the first gas-side valve 37a or the second gas-side valve 37b hardly occurs, and the reliability of the control to close the valve is high.

In step S5, the controller 70 determines, for the indoor expansion valve 36 of the leaking unit that is the indoor unit 30 in which the refrigerant leakage has been detected, whether or not a state of less than the predetermined minute opening degree continues for the predetermined period or longer. Specifically, the controller 70 reads, from the memory, the history information on the control state of the valve opening degree of the indoor expansion valve 36 of the leaking unit out of the first indoor expansion valve 36a and the second indoor expansion valve 36b, and determines whether or not the state of less than the predetermined minute opening degree continues for the predetermined period or longer. For example, when control such as supercooling degree control or superheating degree control is performed on the first indoor expansion valve 36a or the second indoor expansion valve 36b during the cooling operation or the heating operation, if the state in which the thermal load to be processed in the first indoor heat exchanger 32a or the second indoor heat exchanger 32b is small continues, the valve opening degree of the first indoor expansion valve 36a or the second indoor expansion valve 36b is likely to be kept small, and the state of less than the predetermined minute opening degree may continues for the predetermined period or longer. In a state where the condition regarding the set temperature of the first indoor unit 30a during heating is satisfied during the heating operation, the first indoor unit 30a is controlled to be in the thermo-off state during heating, whereby the valve opening degree of the first indoor expansion valve 36a is controlled to be in the predetermined slightly open state that is not the fully closed state but is an opening degree less than the predetermined minute opening degree. Similarly, during the heating operation, in a state where the condition regarding the set temperature of the second indoor unit 30b during heating is satisfied, the second indoor unit 30b is controlled to be in the thermo-off state during heating, so that the valve opening degree of the second indoor expansion valve 36b is controlled to be in the predetermined slightly open state that is not the fully closed state but is an opening degree less than the predetermined minute opening degree. As described above, in a case where the indoor expansion valve 36 of the indoor unit 30 in which the refrigerant has been found to have leaked becomes clear from the control history in which the valve opening degree has been continuously controlled to be a near-closed state, it is considered that there is a high possibility that foreign matter such as debris is present around the indoor expansion valve 36. Therefore, the processing proceeds to step S6, and control is performed to temporarily increase the valve opening degree of the indoor expansion valve 36. On the other hand, when there is no control history indicating that the indoor expansion valve 36 of the indoor unit 30 in which the refrigerant has been found to have leaked has been continuously controlled to be the near-closed state, or the like, the processing proceeds to step S7. Note that the predetermined period is not limited, and may be a predetermined time length, or may be a time required for the integrated number of rotations of the compressor 12 to reach a predetermined number in a state of less than a predetermined minute opening degree.

In step S6, the controller 70 performs control to increase the valve opening degree of the indoor expansion valve 36 of the leaking unit that is the indoor unit 30 in which the refrigerant leakage has been detected to be higher than the current valve opening degree. Specifically, the controller 70 increases the valve opening degree until the valve opening degree of the indoor expansion valve 36 becomes equal to or more than a predetermined opening degree. Here, the predetermined opening degree is not limited, and may be, for example, equal to or more than the opening degree of half opening which is half of the fully open state. Note that, in the present embodiment, a state in which the valve opening degree of the indoor expansion valve 36 of the leaking unit is set to an opening degree equal to or more than the predetermined opening degree is maintained for a predetermined time. The predetermined time may be, for example, 0.5 seconds or more and 5 seconds or less, may be 1 second or less, or may be a time required for moving the valve body to increase by a predetermined valve opening degree. Thus, even if foreign matter such as debris is present around the indoor expansion valve 36, the foreign matter can be moved to a place other than the indoor expansion valve 36, and even if the indoor expansion valve 36 is closed, a situation in which the indoor expansion valve 36 cannot be closed due to the foreign matter being caught between the valve seat and the valve body can be avoided. Note that after the control to increase the valve opening degree of the indoor expansion valve 36 of the leaking unit is performed in step S6, until control to bring the indoor expansion valve 36 of the leaking unit into the fully closed state is started in step S7, control different from the above is not performed as the control of the valve opening degree of the indoor expansion valve 36 of the leaking unit, and the control to bring the indoor expansion valve 36 of the leaking unit into the fully closed state is started immediately after the control to increase the valve opening degree of the indoor expansion valve 36 of the leaking unit is performed. In the present embodiment, when the control to increase the valve opening degree of the indoor expansion valve 36 is performed, the control to decrease the number of rotations to be lower than the current number of rotations is performed when the compressor 12 is being driven. Specifically, the number of rotations of the compressor 12 is decreased by an extent corresponding to an extent of increasing the valve opening degree of the indoor expansion valve 36 from the current state.

In step S7, the controller 70 performs control for the indoor expansion valve 36 of the leaking unit that is the indoor unit 30 in which the refrigerant leakage has been detected to be brought into the fully closed state. Note that, if it is not determined in step S5 that "the state of less than the predetermined minute opening degree continues for the predetermined period or longer", it is considered that there is a low possibility that foreign matter such as debris is present around the indoor expansion valve 36, and thus the valve is closed without performing the processing of increasing the valve opening degree as in step S6.

In step S8, the controller 70 waits for a predetermined time to elapse.

In step S9, the controller 70 determines whether or not the refrigerant sensor 38 of the indoor unit 30 including the refrigerant sensor 38 that has detected a leakage in step S2 has detected refrigerant leakage. Specifically, it is determined whether or not the refrigerant leakage state still continues, even when a predetermined time has elapsed after the control to bring the indoor expansion valve 36 into the fully closed state in step S7. This makes it possible to determine more reliably whether or not the refrigerant leakage can be stopped. When refrigerant leakage is detected, the processing proceeds to step S10. If no refrigerant leakage is detected, the processing returns to step S1 to continue the normal operation of the indoor unit 30 other than the leaking unit.

In step S10, as in step S6, the controller 70 performs control to increase the valve opening degree of the indoor expansion valve 36 included in the leaking unit to be higher than the current valve opening degree. Thus, although the possibility is lower than that in the state of step S6, even if foreign matter such as debris is interposed between the valve body and the valve seat in the indoor expansion valve 36 included in the leaking unit, the foreign matter can be more reliably moved to a position away from the indoor expansion valve 36 included in the leaking unit.

In step S11, the controller 70 performs control to bring the indoor expansion valve 36 of the leaking unit into the fully closed state.

### (4) Characteristics of embodiment

With the refrigeration cycle apparatus 100 of the present embodiment, when the indoor expansion valve 36 is to be closed, it is possible to perform control to increase the valve opening degree before starting the control to bring the indoor expansion valve into the fully closed state. Therefore, this prevents foreign matter such as debris present around the indoor expansion valve 36 from becoming caught in the gap between the valve body and the valve seat when the indoor expansion valve 36 is closed, which can prevent the valve from becoming the fully closed state. Thus, the reliability of the control to bring the indoor expansion valve 36 into the fully closed state is enhanced.

The indoor expansion valves 36a and 36b can be more reliably brought into the fully closed state while avoiding a situation where foreign matter is caught, in the case where the refrigerant sensors 38a and 38b detect the refrigerant leakage, and thus it is possible to suppress continuous supply of the refrigerant passing through the indoor expansion valves 36a and 36b to the corresponding indoor heat exchangers 32a and 32b, and to suppress a refrigerant leakage amount to be small.

The control to increase the valve opening degrees of the indoor expansion valves 36a and 36b is limited to a case where the indoor expansion valves 36a and 36b are in the state of less than the predetermined minute opening degree continues for the predetermined period or longer before the control to bring the indoor expansion valves into the fully closed state is started. Thus, when there is a low possibility that foreign matter is present around the indoor expansion valves 36a and 36b, such as when there is a state where the valve opening degrees of the indoor expansion valves 36a and 36b are equal to or more than a minute opening degree slightly before the control to bring the indoor expansion valves into the fully closed state is started, it is possible to quickly bring the indoor expansion valves into the fully closed state without performing the control to increase the valve opening degree, and it is possible to avoid a situation where the refrigerant leaks through the valves.

In the present embodiment, the indoor expansion valves 36a and 36b can implement two functions of a flow rate regulating valve for controlling the amount of the refrigerant to be sent to the indoor heat exchangers 32a and 32b when performing the refrigeration cycle by circulating the refrigerant in the refrigerant circuit 90 and a blocking valve for blocking the flow of the refrigerant when the refrigerant leakage is detected, and it is not necessary to separately provide a blocking valve for blocking the flow of the refrigerant separately from the indoor expansion valves 36a and 36b.

In the refrigeration cycle apparatus 100 according to the present embodiment, a carbon dioxide refrigerant is used as the refrigerant. When the carbon dioxide refrigerant is used, a risk due to toxicity tends to be a problem even if the concentration of the carbon dioxide refrigerant is lower than that of R32, propane, or the like, but in the present embodiment, since the reliability of the control to bring the indoor expansion valve 36 into the fully closed state is high, it is possible to more reliably suppress leakage of the carbon dioxide refrigerant and reduce the risk due to toxicity of the leaked refrigerant.

In the refrigeration cycle apparatus 100 of the present embodiment, carbon dioxide is used as the refrigerant, and when the refrigeration cycle is performed, the refrigerant is used in a state where the refrigerant pressure on the high pressure side is high. Therefore, in the refrigeration cycle apparatus 100 according to the present embodiment using carbon dioxide as the refrigerant, a refrigerant pipe, a heat transfer tube, or the like constituting the refrigerant circuit 90 is used having a high design pressure and a large wall thickness. In this case, the amount of heat input required for brazing the pipe tends to increase, and as a result, an oxide film tends to be formed on the inner peripheral surface of the pipe. Therefore, during the refrigeration cycle, the oxide film is likely to be peeled off from the inner peripheral surface of the pipe and be caught between the valve body and the valve seat of the expansion valve together with the refrigerant as foreign matter such as debris. Even in this case, by performing the control to increase the valve opening degree as described above, a situation in which foreign matter such as debris is caught between the valve seat and the valve body is suppressed.

In the refrigeration cycle apparatus using carbon dioxide as the refrigerant, the refrigerant pressure tends to increase during the refrigeration cycle, and when the refrigerant leaks, the leakage amount may increase due to the pressure difference between high and low pressure. On the other hand, in the refrigeration cycle apparatus 100 of the present embodiment, by performing the control to increase the valve opening degree as described above, the situation in which foreign matter such as debris is caught between the valve seat and the valve body when the indoor expansion valve 36 is controlled to the fully closed state is suppressed, so that the leakage of the carbon dioxide refrigerant can be more reliably suppressed.

### (5) Other embodiments

### (5-1) Another embodiment A

In the above embodiment, in the case of controlling the indoor expansion valve 36 to the fully closed state by detecting refrigerant leakage, the case of performing control to increase the valve opening degree of the indoor expansion valve 36 before performing the control to bring the indoor expansion valve into the fully closed state has been described as an example.

On the other hand, when the control to increase the valve opening degree of the indoor expansion valve 36 is performed before the control to bring the indoor expansion valve 36 into the fully closed state is performed, the control to increase the valve opening degree of the indoor expansion valve 36 may be performed before the control to bring the indoor expansion valve 36 into the fully closed state not only when the refrigerant leakage is detected, but also when the indoor expansion valve 36 of the indoor unit 30 that has been in the thermo-off state during the cooling operation is controlled to be in the fully closed state instead of or in addition to when the refrigerant leakage is detected.

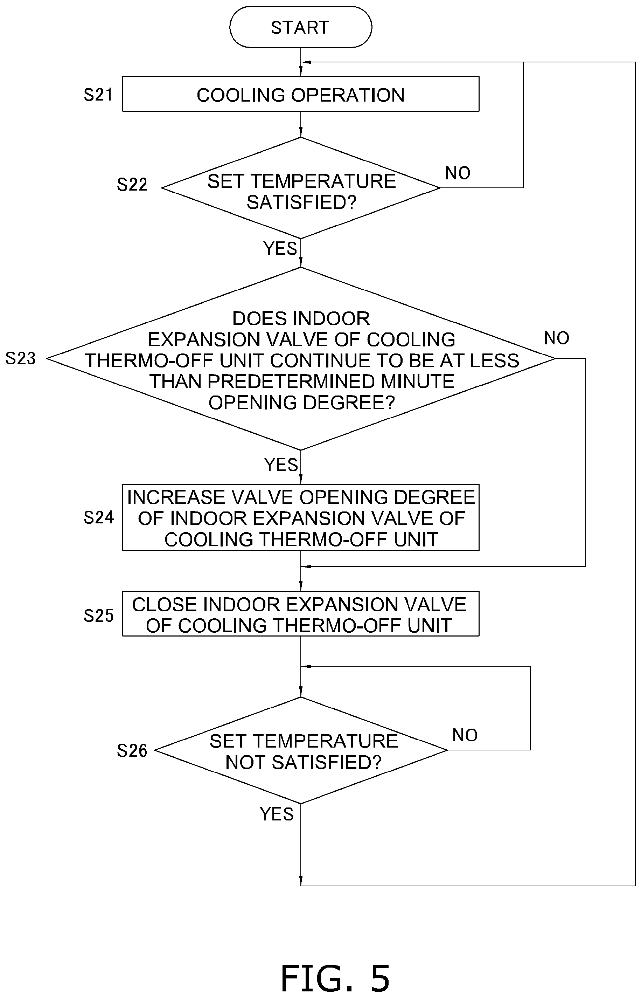

FIG. 5 illustrates an example of a control flowchart in a case where the indoor expansion valve 36 is controlled to the fully closed state during such cooling operation.

In step S21, the controller 70 performs the cooling operation as the normal operation. Specifically, the controller 70 performs the cooling operation on the refrigeration cycle apparatus 100 such that a condition related to a predetermined set temperature is satisfied. Here, the controller 70 controls the valve opening degrees of the first indoor expansion valve 36a and the second indoor expansion valve 36b such that the degree of superheating of the refrigerant sucked by the compressor 12 satisfies a predetermined condition, and stores history information of the control state in the memory.

In step S22, the controller 70 determines whether or not any one of the plurality of indoor units 30 satisfies the condition related to the set temperature during the cooling operation. Specifically, the controller 70 determines, for each indoor unit 30, whether or not the condition related to the set temperature is satisfied on the basis of the set temperature during the cooling operation received by the operation remote controller or the like and the temperature detected by the indoor temperature sensor 33. Here, when there is the indoor unit 30 that satisfies the condition related to the set temperature, the processing in and after step S23 is performed while recognizing the indoor unit 30 that satisfies the condition related to the set temperature as a cooling thermo-off unit. If there is no indoor unit 30 that satisfies the condition related to the set temperature, the processing returns to step S21 to continue the cooling operation.

In step S23, the controller 70 determines, for the indoor expansion valve 36 of the indoor unit 30 serving as the cooling thermo-off unit, whether or not the state of less than the predetermined minute opening degree continues for the predetermined period or longer. Specifically, the controller 70 reads, from the memory, the history information of the control state of the valve opening degree for the indoor expansion valve 36 of the cooling thermo-off unit among the first indoor expansion valve 36a and the second indoor expansion valve 36b, and determines whether or not the state of less than the predetermined minute opening degree continues for the predetermined period or longer. For example, when the control such as the superheating degree control is performed on the first indoor expansion valve 36a and the second indoor expansion valve 36b during the cooling operation, if the state in which the thermal load to be processed in the first indoor heat exchanger 32a and the second indoor heat exchanger 32b is small continues, the valve opening degree of the first indoor expansion valve 36a or the second indoor expansion valve 36b is likely to be kept small, and there is a case where the state of less than the predetermined minute opening degree continues for the predetermined period or longer. As described above, when it becomes clear from the control history that the valve opening degree of the indoor expansion valve 36 of the indoor unit 30 serving as the cooling thermo-off unit has been continuously controlled to be slightly closed, it is considered that there is a high possibility that foreign matter such as debris is present around the indoor expansion valve 36. Therefore, the processing proceeds to step S24, and control is performed to temporarily increase the valve opening degree of the indoor expansion valve 36. On the other hand, when there is no control history indicating that the valve opening degree of the indoor expansion valve 36 of the indoor unit 30 serving as the cooling thermo-off unit has been continuously controlled to be slightly closed, or the like, the processing proceeds to step S25. Note that the predetermined period is not limited, and may be a predetermined time length, or may be a time required for the integrated number of rotations of the compressor 12 to reach a predetermined number in a state of less than a predetermined minute opening degree.

In step S24, the controller 70 performs control to increase the valve opening degree of the indoor expansion valve 36 included in the indoor unit 30 that is the cooling thermo-off unit to be higher than the current valve opening degree. Specifically, the controller 70 increases the valve opening degree until the valve opening degree of the indoor expansion valve 36 becomes equal to or more than the predetermined opening degree. Here, the predetermined opening degree is not limited, and may be, for example, equal to or more than the opening degree of half opening which is half of the fully open state. Note that the state in which the valve opening degree of the indoor expansion valve 36 of the cooling thermo-off unit is equal to or more than the predetermined opening degree is maintained for a predetermined time, for example. The predetermined time may be, for example, 0.5 seconds or more and 5 seconds or less, may be 1 second or less, or may be a time required for moving the valve body to increase by a predetermined valve opening degree. Thus, even if foreign matter such as debris is present around the indoor expansion valve 36, the foreign matter can be moved to a place other than the indoor expansion valve 36, and even if the indoor expansion valve 36 is closed, a situation in which the indoor expansion valve 36 cannot be closed due to the foreign matter being caught between the valve seat and the valve body can be avoided. Note that, after the control to increase the valve opening degree of the indoor expansion valve 36 of the leaking unit is performed in step S24, until the control to bring the indoor expansion valve 36 of the leaking unit into the fully closed state is started in step S25, control different from the above is not performed as the control of the valve opening degree of the indoor expansion valve 36 of the cooling thermo-off unit, and the control to bring the indoor expansion valve 36 of the cooling thermo-off unit into the fully closed state is started immediately after the control to increase the valve opening degree of the indoor expansion valve 36 of the cooling thermo-off unit is performed. In addition, when the compressor 12 is being driven at the time of performing the control to increase the valve opening degree of the indoor expansion valve 36, the control to decrease the number of rotations to be lower than the current number of rotations is performed. Specifically, the number of rotations of the compressor 12 is decreased by an extent corresponding to an extent of increasing the valve opening degree of the indoor expansion valve 36 from the current state.

In step S25, the controller 70 performs control to bring the indoor expansion valve 36 included in the indoor unit 30 that is the cooling thermo-off unit to be in the fully closed state. Note that, if it is not determined in step S23 that "the state of less than the predetermined minute opening degree continues for the predetermined period or longer", it is considered that there is a low possibility that foreign matter such as debris is present around the indoor expansion valve 36, and thus the valve is closed without performing the processing of increasing the valve opening degree as in step S24.

In step S26, the controller 70 determines whether or not the indoor unit 30 of the cooling thermo-off unit does not satisfy the condition related to the set temperature during the cooling operation. Specifically, the controller 70 determines whether or not the indoor unit 30 of the cooling thermo-off unit does not satisfy the condition related to the set temperature on the basis of the set temperature during the cooling operation and the temperature detected by the indoor temperature sensor 33. Here, when it is determined that the condition related to the set temperature is not satisfied, the processing returns to step S21 to restart the cooling operation that is the normal control for the indoor unit 30 that has been the cooling thermo-off unit.

By the above control, a decrease in the temperature of the indoor heat exchanger 32 of the indoor unit 30 that has become the thermo-off state during the cooling operation is suppressed, and sending of cool air from the indoor heat exchanger 32 toward the air conditioning target space is more reliably suppressed.

### (5-2) Another embodiment B

The control to increase the valve opening degree of the indoor expansion valve 36 before the control to bring the indoor expansion valve 36 into the fully closed state may be performed, for example, when the pump-down operation of the refrigeration cycle apparatus 100 is started instead of or in addition to the above examples.

The pump-down operation is an operation of controlling the indoor expansion valves 36a and 36b of the indoor units 30a and 30b to be in the fully closed state, and driving the compressor 12 to cause the outdoor heat exchanger 16 to function as a radiator for the refrigerant to collect the refrigerant that has radiated heat from the indoor expansion valves 36a and 36b to the outdoor heat exchanger 16, thereby recovering the refrigerant in the refrigerant circuit 90.

For example, the refrigeration cycle apparatus 100 may receive an instruction to start the pump-down operation by pressing a predetermined button provided in the refrigeration cycle apparatus 100, or may receive the instruction to start the pump-down operation by an operation input from a remote controller. The pump-down operation may be started when any of the first refrigerant sensor 38a and the second refrigerant sensor 38b described above detects refrigerant leakage, and in this case, the control of the pump-down operation described below may be applied instead of the control of the first indoor expansion valve 36a, the second indoor expansion valve 36b, the first gas-side valve 37a, and the second gas-side valve 37b in the above embodiment.

The controller 70 that has received the instruction to start the pump-down operation maintains the connection state of the flow path switching valve 14 when the cooling operation is performed, and switches the connection state of the flow path switching valve 14 to the connection state of the cooling operation to start the pump-down operation when the heating operation is performed. Here, if there are the indoor expansion valves 36a and 36b in which the state of less than the predetermined minute opening degree continues for the predetermined period or longer at the time of starting the pump-down operation, the controller 70 performs the control to increase the valve opening degree to be higher than the current valve opening degree and then performs the control to achieve the fully closed state as in the above embodiment. Here, the outdoor expansion valve 18 is maintained in a state that is not the fully closed state such as a fully open state. Note that the controller 70 starts the pump-down operation while keeping the first gas-side valve 37a and the second gas-side valve 37b in the fully open state, and performs the control to bring the first gas-side valve 37a and the second gas-side valve 37b into the fully closed state when a predetermined recovery end condition is satisfied after the refrigerant recovery. The recovery end condition is not limited, and may be a condition that the integrated operation time from the start of the pump-down operation becomes a predetermined time, a condition that the degree of superheating of the refrigerant sucked into the compressor 12 becomes equal to or more than a predetermined value, or the like. Thereafter, the driving of the compressor 12 is stopped, and the pump-down operation is terminated.

According to the above control, it is possible to more reliably suppress a state in which the refrigerant leaks and flows from the indoor expansion valves 36a and 36b toward the indoor heat exchangers 32a and 32b during the pump-down operation.

### (5-3) Another embodiment C

In the above embodiment, the carbon dioxide refrigerant has been described as an example of the refrigerant used by filling the refrigerant circuit 90.

On the other hand, the refrigerant used in the refrigerant circuit 90 is not limited thereto, and may be, for example, R32 or propane.

Although R32 and propane have flammability, it is possible to reduce the risk of combustion due to the leaked refrigerant by more reliably suppressing leakage of these refrigerants.

### (5-4) Another embodiment D

In the above embodiment, the case where the gas-side valves 37a and 37b are provided in the indoor units 30a and 30b has been described as an example.

On the other hand, the gas-side valves 37a and 37b need not be included in the indoor units 30a and 30b, and for example, a valve unit including the gas-side valves 37a and 37b may be provided as a unit different from the indoor units 30a and 30b.

### <Others>

The embodiments of the present disclosure have been described above. It will be understood that various changes to modes and details can be made without departing from the gist and scope of the present disclosure recited in the claims.

### REFERENCE SIGNS LIST

2: Liquid-side connection pipe (first main flow path, first flow path)
2a: First liquid-side branch pipe (first branch flow path, first flow path)
2b: Second liquid-side branch pipe (second branch flow path, first flow path)
4: Gas-side connection pipe (second main flow path, second flow path)
4a: First gas-side branch pipe (third branch flow path, second flow path)
4b: Second gas-side branch pipe (fourth branch flow path, second flow path)
10: Outdoor unit
12: Compressor
14: Flow path switching valve
16: Outdoor heat exchanger
18: Outdoor expansion valve
20: Accumulator
21: Discharge pressure sensor
22: Outdoor fan
23: Suction pressure sensor
24: Liquid shutoff valve
25: Suction temperature sensor
26: Gas shutoff valve
27: Outdoor heat-exchange temperature sensor
28a: Suction pipe (second main flow path, second flow path)
28b: Discharge pipe (second main flow path, second flow path)
28c: First gas refrigerant pipe (second main flow path, second flow path)
28d: Liquid refrigerant pipe
28e: Second gas refrigerant pipe (second main flow path, second flow path)
30: Indoor unit
30a: First indoor unit
30b: Second indoor unit
31a: First casing
31b: Second casing
32: Indoor heat exchanger
32a: First indoor heat exchanger
32b: Second indoor heat exchanger
33a: First indoor temperature sensor
33b: Second indoor temperature sensor
34a: First indoor fan
34b: Second indoor fan
35a: First indoor heat-exchange temperature sensor
35b: Second indoor heat-exchange temperature sensor
36: Indoor expansion valve (electric expansion valve)
36a: First indoor expansion valve (electric expansion valve, first electric expansion valve)
36b: Second indoor expansion valve (electric expansion valve, second electric expansion valve)
37: Gas-side valve
37a: First gas-side valve
37b: Second gas-side valve
38: Refrigerant sensor
38a: First refrigerant sensor (leakage detection unit)
38b: Second refrigerant sensor (leakage detection unit)
70: Controller (control unit)
72: Indoor control unit
72a: First indoor control unit
72b: Second indoor control unit
74: Outdoor control unit
90: Refrigerant circuit
100: Refrigeration cycle apparatus
X: First branch point
Y: Second branch point

### CITATION LIST

### PATENT LITERATURE

Patent Literature 1: Japanese Unexamined Patent Publication No. 2016-035356 A

## Claims

1. A refrigeration cycle apparatus (100) comprising:
a refrigerant circuit (90) that includes an electric expansion valve (36a, 36b) and through which a refrigerant circulates; and
a control unit (70) that controls an opening degree of the electric expansion valve, wherein
when a predetermined condition including a predetermined fully closed condition is satisfied, the control unit performs first control to increase a valve opening degree of the electric expansion valve and then performs second control to fully close the electric expansion valve.

2. The refrigeration cycle apparatus according to claim 1, wherein
in the first control, the control unit maintains a state in which the valve opening degree of the electric expansion valve is equal to or more than a first predetermined opening degree until a first predetermined period condition is satisfied, and performs the second control immediately after performing the first control.

3. The refrigeration cycle apparatus according to claim 1 or 2, wherein
the predetermined condition includes a pre-state condition that a state in which the valve opening degree of the electric expansion valve is less than a second predetermined opening degree continues for a period satisfying a second predetermined period condition or longer.

4. The refrigeration cycle apparatus according to claim 3, wherein
the control unit performs control such that the valve opening degree of the electric expansion valve is less than the second predetermined opening degree when a thermal load to be processed is in a predetermined low load state.

5. The refrigeration cycle apparatus according to claim 3 or 4, wherein
the refrigerant circuit includes a compressor (12), an outdoor heat exchanger (16), an indoor heat exchanger (32a, 32b), a first flow path (2, 2a, 2b) extending from the outdoor heat exchanger to the indoor heat exchanger and provided with the electric expansion valve, and a second flow path (4, 4a, 4b, 28e, 28a, 28b, 28c) extending from the outdoor heat exchanger to the indoor heat exchanger and provided with the compressor,
the refrigerant circuit is capable of performing a heating operation to cause the indoor heat exchanger to function as a radiator for the refrigerant, and
the control unit performs control such that the valve opening degree of the electric expansion valve is less than the second predetermined opening degree and is not in a fully closed state when a condition related to a set temperature corresponding to the indoor heat exchanger is satisfied.

6. The refrigeration cycle apparatus according to claim 3 or 4, wherein
the refrigerant circuit includes a compressor (12), an outdoor heat exchanger (16), an indoor heat exchanger (32a, 32b), a first flow path (2, 2a, 2b) extending from the outdoor heat exchanger to the indoor heat exchanger and provided with the electric expansion valve, and a second flow path (4, 4a, 4b, 28e, 28a, 28b, 28c) extending from the outdoor heat exchanger to the indoor heat exchanger and provided with the compressor,
the refrigerant circuit is capable of performing a cooling operation to cause the indoor heat exchanger to function as an evaporator for the refrigerant, and
the control unit satisfies the predetermined fully closed condition when a condition related to a set temperature corresponding to the indoor heat exchanger is satisfied.

7. The refrigeration cycle apparatus according to claim 3 or 4, wherein
the refrigerant circuit includes a compressor (12), an outdoor heat exchanger (16), a first indoor heat exchanger (32a), a second indoor heat exchanger (32b), a first electric expansion valve (36a) as the electric expansion valve, a second electric expansion valve (36b) as the electric expansion valve, a first main flow path (2) extending from the outdoor heat exchanger to a first branch portion (X), a first branch flow path (2a) extending from the first branch portion to the first indoor heat exchanger and provided with the first electric expansion valve, a second branch flow path (2b) extending from the first branch portion to the second indoor heat exchanger and provided with the second electric expansion valve, a second main flow path (4, 28e, 28a, 28b, 28c) extending from the outdoor heat exchanger to a second branch portion (Y) and provided with the compressor, a third branch flow path (4a) extending from the second branch portion to the first indoor heat exchanger, and a fourth branch flow path (4b) extending from the second branch portion to the second indoor heat exchanger.

8. The refrigeration cycle apparatus according to claim 7, wherein
the refrigerant circuit is capable of performing a heating operation to cause the first indoor heat exchanger and the second indoor heat exchanger to function as radiators for the refrigerant, and
the control unit performs control such that the valve opening degree of the first electric expansion valve is less than the second predetermined opening degree and is not in a fully closed state when a condition related to a set temperature corresponding to the first indoor heat exchanger is satisfied, and performs control such that the valve opening degree of the second electric expansion valve is less than the second predetermined opening degree and is not in the fully closed state when a condition related to a set temperature corresponding to the second indoor heat exchanger is satisfied.

9. The refrigeration cycle apparatus according to claim 7 or 8, wherein
the refrigerant circuit is capable of performing a cooling operation to cause the first indoor heat exchanger and the second indoor heat exchanger to function as evaporators for the refrigerant,
the first electric expansion valve satisfies the predetermined fully closed condition when a condition related to a set temperature corresponding to the first indoor heat exchanger is satisfied, and
the second electric expansion valve satisfies the predetermined fully closed condition when a condition related to a set temperature corresponding to the second indoor heat exchanger is satisfied.

10. The refrigeration cycle apparatus according to any one of claims 1 to 9, further comprising:
a leakage detection unit (38a, 38b) that detects the refrigerant leaking from the refrigerant circuit, wherein
the predetermined fully closed condition includes detection of leakage of the refrigerant by the leakage detection unit.

11. The refrigeration cycle apparatus according to any one of claims 3 to 9, wherein
the control unit performs the second control without performing the first control when the predetermined fully closed condition is satisfied without satisfying the pre-state condition.

12. The refrigeration cycle apparatus according to any one of claims 1 to 4, wherein
the refrigerant circuit includes a compressor (12), an outdoor heat exchanger (16), an indoor heat exchanger (32a, 32b), a first flow path (2, 2a, 2b) extending from the outdoor heat exchanger to the indoor heat exchanger and provided with the electric expansion valve, and a second flow path (4, 4a, 4b, 28e, 28a, 28b, 28c) extending from the outdoor heat exchanger to the indoor heat exchanger and provided with the compressor,
the control unit is capable of performing pump-down operation control to cause the outdoor heat exchanger to function as a radiator for the refrigerant while causing the electric expansion valve to be in a fully closed state, and
the predetermined condition is satisfied when the pump-down operation control is started.

13. The refrigeration cycle apparatus according to any one of claims 1 to 12, wherein
in the first control, the control unit increases a valve opening degree of the electric expansion valve until the valve opening degree becomes a half opening degree or more.

14. The refrigeration cycle apparatus according to any one of claims 1 to 13, wherein
the refrigerant is a refrigerant having at least one of predetermined toxicity and predetermined flammability.

15. The refrigeration cycle apparatus according to any one of claims 1 to 14, wherein
the refrigerant is a carbon dioxide refrigerant.

16. A method for controlling an electric expansion valve (36a, 36b) of a refrigeration cycle apparatus (100), wherein
the refrigeration cycle apparatus includes a refrigerant circuit (90) that includes the electric expansion valve and through which a refrigerant circulates, and a control unit (70) that controls an opening degree of the electric expansion valve, and
the control unit performs first control to increase a valve opening degree of the electric expansion valve and then performs second control to fully close the electric expansion valve when a predetermined condition including a predetermined fully closed condition is satisfied.
